# EUROPEAN PATENT APPLICATION

(11) **EP 3 346 641 A1**
(43) Date of publication of application: **11.07.2018**
(21) Application number: 15904322.3
(22) Date of filing: 21.09.2015
(51) Int. Cl.: H04L 12/24

(54) **METHOD AND APPARATUS FOR COLLECTING STATISTICS ON PACKET CONGESTIONS**

(71) Applicant: Huawei Technologies Co., Ltd., Longgang District Shenzhen, Guangdong 518129 (CN)
(72) Inventor: WU, Wenjing, Shenzhen Guangdong 518129 (CN)
(74) Representative: Epping - Hermann - Fischer
(86) International application number: PCT/CN2015/090153
(87) International publication number: WO 2017/049434

(57) **Abstract**

Embodiments of the present invention provide a congestion statistics collection method and apparatus. The method includes: when a packet cannot enter a queue, obtaining a head packet length of a congested queue, and determining that ONT-level congestion occurs, when the head packet length of the queue is greater than a capacity of an optical network terminal ONT token bucket. According to the foregoing technical solutions, an operator can identify a packet congestion point, and adjust a service to ensure better user experience.

## Description

### TECHNICAL FIELD

The present invention relates to the communications field, and in particular, to a packet congestion statistics collection method and apparatus.

### BACKGROUND

To ensure that a limited network resource provides a better network service, an operator needs to monitor and manage a network traffic rate, so as to limit traffic and improve network resource utilization efficiency. To achieve the purpose, traffic entering a network needs to be monitored, so as to avoid network congestion. If the traffic does not overspeed, a device awards a green card to a packet (colors the packet green), and in this case, the packet is not blocked and can be forwarded; if the traffic slightly overspeeds, a device gives a yellow card warning (colors a packet yellow), and in this case, usually the packet is degraded, that is, an inner priority of the packet is modified, and then the packet is forwarded in a best-effort manner; or if the traffic greatly overspeeds, a device gives a red card (colors a packet red) to prohibit the packet in a publishing manner, and in this case, the packet is prohibited from passing, that is, is discarded. Usually, a token bucket is used to estimate a packet rate. The token bucket may be considered as a container for storing a token. A specific capacity is preset, and a system places a token into the bucket at a specified rate. When the bucket is full of tokens, superfluous tokens overflow, and no more token is placed into the bucket. The token bucket is used to estimate the traffic based on whether a quantity of tokens in the token bucket is sufficient for packet forwarding. Each packet that needs to be forwarded needs to get some tokens (a specific quantity depends on a packet size) from the token bucket before being normally forwarded. If the bucket has sufficient tokens that can be used for packet forwarding, it is considered that the traffic complies with or conforms to an agreed value. If the bucket does not have sufficient tokens that can be used for packet forwarding, it is considered that the traffic does not conform to an agreed value or exceeds an agreed value. According to a rate of placing a token into the token bucket by the system and a quantity of token buckets, a token bucket algorithm has three modes: single-rate and single-bucket, single-rate and double-buckets, and double-rates and double-buckets.

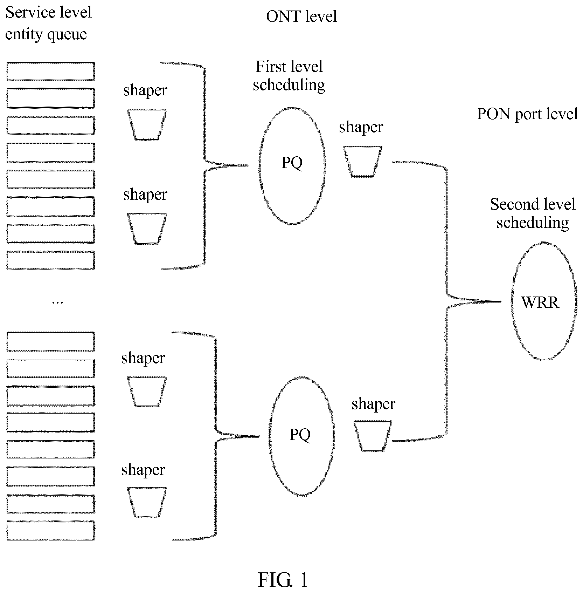

A hierarchical quality of service (Hierarchical Quality of Service, HQoS) function used by a current network device is usually implemented in a hierarchical scheduling manner, and each hierarchy supports a shaping (Shaping) and rate limiting function. For example, as shown in FIG. 1, a downstream HQoS function of a passive optical network (Passive Optical Network, PON) port usually has two hierarchies: an optical network terminal (Optical Network Terminal, ONT) level and a PON port level. The ONT level has eight priority queues, and the PON port level supports 128 ONTs or 256 ONTs. After queue shaping or ONT shaping is enabled, when statistics about packet discarding during enqueuing are collected, whether discarding is caused by single-user (queue or ONT) congestion or PON port congestion cannot be determined.

### SUMMARY

In view of this, embodiments of the present invention provide a packet congestion statistics collection method and apparatus, so as to resolve a technical problem that an operator cannot identify a congestion cause.

According to a first aspect, a packet congestion statistics collection method is provided, including: obtaining a head packet length of a congested queue, and determining that ONT-level congestion occurs, when the head packet length of the queue is greater than a capacity of an optical network terminal ONT token bucket.

With reference to the first aspect, in a first possible implementation of the first aspect, before the determining that ONT-level congestion occurs, when the head packet length of the queue is greater than a capacity of an optical network terminal ONT token bucket, the method includes: determining that queue-level congestion occurs, when the head packet length of the queue is greater than a capacity of a queue token bucket.

With reference to the first aspect or the first possible implementation of the first aspect, in a second possible implementation of the first aspect, the method further includes: determining that PON port-level congestion occurs, when the head packet length of the queue is less than the capacity of the ONT token bucket.

According to a second aspect, a packet congestion statistics collection apparatus is provided, including: an obtaining module, configured to obtain a head packet length of a congested queue; and a rate limit module, configured to: determine that ONT-level congestion occurs, when the head packet length of the queue is greater than a capacity of an optical network terminal ONT token bucket.

With reference to the second aspect, in a first possible implementation of the second aspect, the apparatus further includes a queue rate limit module, configured to: determine that queue-level congestion occurs, when the head packet length of the queue is greater than a capacity of a queue token bucket.

With reference to the second aspect or the first possible implementation of the second aspect, in a second possible implementation of the second aspect, the rate limit module is further configured to: determine that PON port-level congestion occurs, when the head packet length of the queue is less than the capacity of the ONT token bucket.

According to the foregoing technical solutions, an operator can identify a packet congestion point, and adjust a service to ensure better user experience.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic hierarchical diagram of a downstream HQoS function of a passive optical network PON port;
FIG. 2 is a schematic diagram of using a trTCM color-blind mode when a packet is discarded;
FIG. 3 is a flowchart of a packet congestion statistics collection method according to an embodiment of the present invention;
FIG. 4 is a schematic diagram of packet congestion statistics collection according to an embodiment of the present invention; and
FIG. 5 is a schematic structural diagram of a packet congestion statistics collection apparatus according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

It should be understood that an HQoS function of a current network device chip is usually implemented by using a method of one level entity queue and hierarchical scheduling, and each hierarchy supports a shaping and rate limiting function. As shown in FIG. 1, for example, a downstream HQoS function of a PON port generally includes two hierarchies: an ONT level and a PON port level. The ONT level has eight priority queues, and the PON port level supports 128 ONTs or 256 ONTs. After a queue shaping function or an ONT shaping function is enabled, when statistics about packet discarding during enqueuing are collected, whether discarding is caused by queue or ONT congestion or caused by PON port congestion cannot be determined. The embodiments of the present invention provide a solution to the technical problem.

A person of ordinary skill in the art knows that shaping and rate limiting are usually implemented by using a queue and a token bucket. Description is given by using a single rate and a single bucket as an example. It should be understood that the embodiments of the present invention are also applicable to a rate limiting method of another token bucket.

To achieve a rate limiting purpose, traffic (that is, a packet) that enters a network needs to be monitored, so as to achieve a committed access rate (Committed Access Rate, CAR). The CAR is limiting a rate of user traffic that enters the network within an agreed range, so as to avoid causing network congestion. To achieve the CAR, the traffic needs to be estimated, and then a corresponding action is performed on the traffic according to an estimation result.

If the traffic does not overspeed, a device awards a green card to the packet, and in this case, the packet is not blocked, that is, is forwarded.

If the traffic slightly overspeeds, a device gives a yellow card warning, and usually, the packet is degraded, that is, an inner priority of the packet is modified, and then the packet is forwarded in a best-effort manner.

If the traffic greatly overspeeds, a device gives a red card to prohibit the packet in a publishing manner, and the packet is prohibited from passing, that is, is discarded.

A committed burst size (Committed Burst Size, CBS) indicates a capacity of a token bucket, that is, committed burst traffic that can instantly pass through a bucket C. In a single-rate single-bucket mode, a system places a token into the bucket C at a committed information rate (Committed Information Rate, CIR). The CIR is an average rate at which the bucket C is allowed to transmit or forward a packet. If a total quantity of available tokens (denoted as Tc) is less than the CBS, the quantity of tokens continues to increase, and if the token bucket is full, the quantity of tokens is not increased any more.

For an arrived packet (a packet length is denoted as B), if B is less than Tc, the packet is marked green, and Tc is reduced by B; or if B is greater than Tc, the packet is marked red, and Tc is not reduced. It is assumed that the first arrived packet is 1500 bytes. When the bucket C is being checked, it is found that the quantity of tokens is greater than the packet length. Therefore, the packet is marked green, tokens of 1500 bytes are reduced from the bucket C, and there are 500 remaining bytes (it is assumed that the token bucket has tokens of 2000 bytes in an initial state). It is assumed that the second packet that arrives 1 millisecond later is 1500 bytes. Within this interval, new tokens of 125 bytes are added to the bucket C (that is, the CIR is 125 bytes/millisecond). The 125 bytes is added to the original remaining tokens of 500 bytes, and in this case, the bucket C has a total of 625 bytes. The quantity of tokens is not enough, and the packet is marked red.

It is assumed that the third packet that arrives another 1 millisecond later is 1000 bytes. Within this interval, new tokens of 125 bytes are added to the bucket C. The 125 bytes is added to the original remaining tokens of 625 bytes, and in this case, the bucket C has a total of 750 bytes. The quantity of tokens is not enough, and therefore, the packet is marked red. It is assumed that the fourth packet that arrives 20 milliseconds later is 1500 bytes. Within this interval, new tokens of 2500 bytes are added to the bucket C. The 2500 bytes is added to the original remaining tokens of 750 bytes, and in this case, the quantity of tokens in the bucket C is 3250 bytes. However, the CBS is 2000 bytes, and therefore, tokens of 1250 bytes overflow and are discarded. In this case, the quantity of tokens in the bucket C is greater than the packet length, the packet is marked green, tokens of 1500 bytes are reduced from the bucket C, and there are 500 remaining bytes.

A packet processing process is shown in the following Table 1:

**Table 1**

| **Packet sequence number** | **Moment** | **Packet length** | **Interval between a current token arrival time and a previous token arrival time** | **Quantity of currently added tokens** | **Quantity of tokens in a bucket C after a token is added** | **Quantity of remaining tokens in a bucket C after packet processing** | **Packet mark result** |
|---|---|---|---|---|---|---|---|
| - | Initial moment | - | - | - | 2000 | 2000 | - |
| 1 | 0 | 1500 | 0 | 0 | 2000 | 500 | Green |
| 2 | 1 | 1500 | 1 | 125 | 625 | 625 | Red |
| 3 | 2 | 1000 | 1 | 125 | 750 | 750 | Red |
| 4 | 22 | 1500 | 20 | 2500 | 2000 | 500 | Green |

It should be understood that when a packet cached in the queue needs to dequeue, if a packet length is greater than the capacity of the token bucket, the packet cannot dequeue, and needs to continue to wait in a queue cache. A newly arrived packet enters the queue cache, and if the queue cache is full, the newly arrived packet cannot enter the queue, and the newly arrived packet is discarded. A purpose of this embodiment of the present invention is to collect statistics about a fact that congestion at which level causes discarding of the packet.

For ease of understanding, a trTCM token bucket is used as an example of a shaping and rate limiting algorithm. The trTCM algorithm is defined in the standard RFC2698, and the rate limiting algorithm is not described in detail herein.

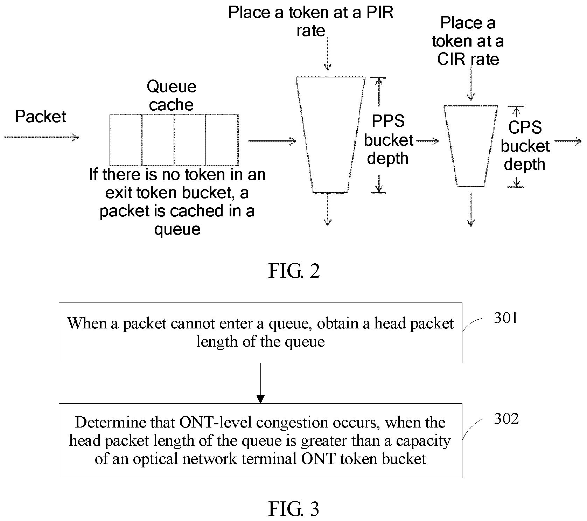

In the trTCM rate limiting algorithm, as shown in FIG. 2, if a packet length is less than a PBS bucket depth, and greater than a CBS bucket depth, a packet can normally dequeue, and is marked yellow. In this case, a new PBS bucket depth is a depth obtained by subtracting the packet length from the original PBS bucket depth. If a packet length is less than a PBS bucket depth, and less than a CBS bucket depth, a packet can normally dequeue, and is marked green. A new PBS bucket depth is a depth obtained by subtracting the packet length from the original PBS bucket depth, and a new CBS bucket depth is a depth obtained by subtracting the packet length from the original CBS bucket depth.

The following specially describes how to collect statistics about at which level packet discarding occurs, when a queue cache is full and a newly arrived packet cannot enqueue and is discarded, as shown in FIG. 3. An embodiment of the present invention provides a packet congestion statistics collection method, including the following steps:
Step 301: When a packet cannot enter a queue, obtain a head packet length of the queue.
Step 302: Determine that ONT congestion occurs, when the head packet length of the queue is greater than a capacity of an optical network terminal ONT token bucket. Optionally, before step S302, the method further includes:
   determine that queue-level congestion occurs, when a shaping and rate limiting function is configured for the queue, and it is determined that the head packet length of the queue is greater than a capacity of a current queue token bucket. Optionally, the method further includes:
Step 303: When the head packet length of the queue is less than a capacity of a current ONT token bucket, record PON port congestion.

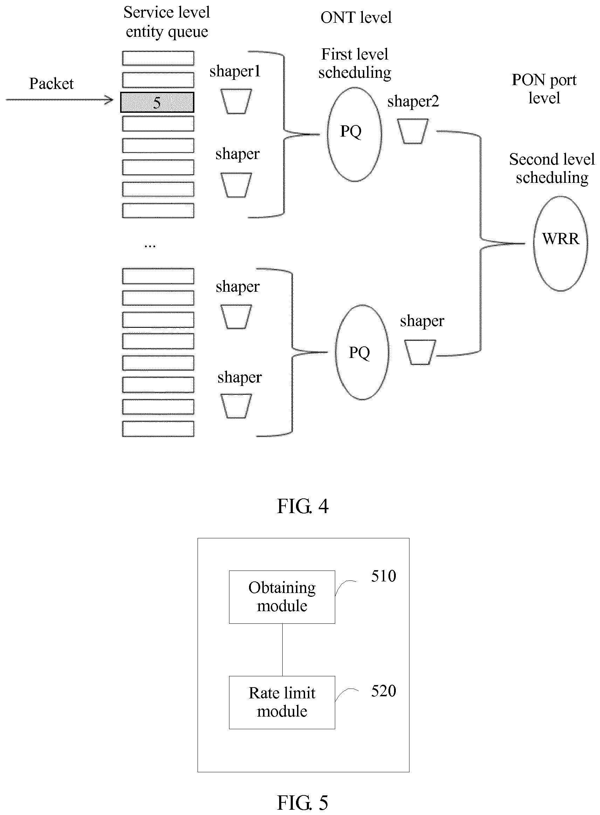

Correspondingly, FIG. 4 is a schematic diagram of packet congestion statistics collection according to an embodiment of the present invention. The schematic diagram intuitively and simply displays two levels of scheduling in this embodiment of the present invention, that is, an ONT level and a PON port level. When a newly arrived packet cannot enter a service entity queue, packet discarding occurs. According to the foregoing technical solutions, an operator can identify a packet congestion point, and adjust a service to ensure better user experience.

An embodiment of the present invention further provides a congestion statistics collection apparatus, and as shown in FIG. 5, the apparatus includes:
an obtaining module 510, configured to: when a packet cannot enter a queue, obtain a head packet length of the queue; and
a rate limit module 520, configured to: determine that ONT-level congestion occurs, when the head packet length of the queue is greater than a capacity of an optical network terminal ONT token bucket.

Optionally, the apparatus further includes:
a queue rate limit module, configured to: determine that queue-level congestion occurs, when the head packet length of the queue is greater than a capacity of a queue token bucket.

Optionally, the apparatus includes:
a PON port rate limit module, configured to: determine that PON port-level congestion occurs, when the head packet length of the queue is less than a capacity of an ONT token bucket.

Preferably, the apparatus provided in this embodiment of the present invention may be, in terms of an entity, a field programmable gate array (Field Programmable Gate Array, FPGA), may be an application-specific integrated circuit (Application Specific Integrated Circuit, ASIC), may be a system on chip (System on Chip, SoC), may be a central processing unit (Central Processing Unit, CPU), may be a network processor (Network Processor, NP), may be a digital signal processing circuit (Digital Signal Processor, DSP), may be a micro controller unit (Micro Controller Unit, MCU), or may be a programmable controller (Programmable Controller, PC) or another integrated chip.

A person of ordinary skill in the art may understand that, each aspect of the present invention or a possible implementation of each aspect may be specifically implemented as a system, a method, or a computer program product. Therefore, each aspect of the present invention or a possible implementation of each aspect may use forms of hardware only embodiments, software only embodiments (including firmware, resident software, and the like), or embodiments with a combination of software and hardware, which are uniformly referred to as "circuit", "module", or "system" herein. In addition, each aspect of the present invention or the possible implementation of each aspect may take a form of a computer program product, where the computer program product is computer-readable program code stored in a computer-readable medium.

The computer-readable medium may be a computer-readable signal medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may actually be executed substantially at the same time, or these blocks may sometimes be executed in reverse order.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that he may still make modifications to the technical solutions described in the foregoing embodiments or make equivalent replacements to some or all technical features thereof. Therefore, the protection scope of the present invention shall be subject to the protection scope of the claims.

## Claims

1. A congestion statistics collection method, comprising:
when a packet cannot enter a queue, obtaining a head packet length of the queue; and
determining that ONT-level congestion occurs, when the head packet length of the queue is greater than a capacity of an optical network terminal ONT token bucket.

2. The method according to claim 1, wherein before the determining that ONT-level congestion occurs, when the head packet length of the queue is greater than a capacity of an optical network terminal ONT token bucket, the method comprises:
determining that queue-level congestion occurs, when the head packet length of the queue is greater than a capacity of a queue token bucket.

3. The method according to claim 1 or 2, wherein the method further comprises: determining that PON port-level congestion occurs, when the head packet length of the queue is less than the capacity of the ONT token bucket.

4. A congestion statistics collection apparatus, comprising:
an obtaining module, configured to obtain a head packet length of a congested queue; and
a rate limit module, configured to: determine that ONT-level congestion occurs, when the head packet length of the queue is greater than a capacity of an optical network terminal ONT token bucket.

5. The apparatus according to claim 4, wherein the apparatus further comprises:
a queue rate limit module, configured to: determine that queue-level congestion occurs, when the head packet length of the queue is greater than a capacity of a queue token bucket.

6. The apparatus according to claim 4 or 5, wherein the rate limit module is further configured to: determine that PON port-level congestion occurs, when the head packet length of the queue is less than the capacity of the ONT token bucket.
